Europäisches Patentamt

European Patent Office

Office européen des brevets

(11) Veröffentlichungsnummer: **0 338 400 B1**

# EUROPÄISCHE PATENTSCHRIFT

(45) Veröffentlichungstag der Patentschrift: **10.08.94**

(51) Int. Cl.5: **G01F 23/26**, G01F 23/24

(21) Anmeldenummer: **89106489.1**

(22) Anmeldetag: **12.04.89**

(54) **Kapazitiver Sensor zum Bestimmen des Niveaus einer Flüssigkeit in einem Behälter.**

(30) Priorität: **16.04.88 DE 3812687**

(43) Veröffentlichungstag der Anmeldung:
**25.10.89 Patentblatt 89/43**

(45) Bekanntmachung des Hinweises auf die
Patenterteilung:
**10.08.94 Patentblatt 94/32**

(84) Benannte Vertragsstaaten:
**DE ES FR GB IT SE**

(56) Entgegenhaltungen:
EP-A- 0 271 849        EP-A- 0 288 215
WO-A-85/04718        DE-A- 2 319 008
DE-A- 3 322 657        NL-A- 6 714 416
NL-A- 7 603 909

MEASUREMENT AND CONTROL. vol. 21, no.
1, Februar 1988, LONDON GB Seiten 15 -19;
N. WATMOUGH: "CAPACITANCE FOR LEVEL
MEASUREMENT"

JOURNAL OF PHYSICS E. SCIENTIFIC IN-
STRUMENTS. vol. 16, no. 9, September
1983,ISHING, BRISTOL GB Seiten 827 - 828;
P.I. ROSS: "A WATER-LEVEL SENSOR USING
A CAPACITANCE TO FREOUENCY CONVER-
TER"

(73) Patentinhaber: **DODUCO GMBH + Co Dr. Eugen Dürrwächter**
**Im Altgefäll 12**
**D-75181 Pforzheim (DE)**

(72) Erfinder: **Normann, Norbert, Dr. Dipl.-Phys.**
**Hauptstrasse 384**
**D-7532 Niefern-Öschelbronn 2 (DE)**
Erfinder: **Uhl, Günter, Dr. Dipl.-Ing.**
**Landhausstrasse 45**
**D-7267 Unterreichenbach (DE)**

(74) Vertreter: **Twelmeier, Ulrich, Dipl.Phys. et al**
**Westliche Karl-Friedrich-Strasse 29-31**
**D-75172 Pforzheim (DE)**

**Beschreibung**

Die Erfindung geht aus von einem Sensor mit den im Oberbegriff des Anspruchs 1 angegebenen Merkmalen. Ein solcher Sensor ist aus Measurement + Control, Vol.21, No. 1, Febr. 1988, London GB, S.15-19 bekannt. Es handelt sich dabei um einen kapazitiven Niveausensor, der zur Verwendung in leitender Flüssigkeit isolierte Elektroden hat und eine Messung des Blindwiderstands bei zwei Frequenzen erlaubt, um den Einfluß von Abschirmeffekten auf die Niveaumessung korrigieren zu können. Eine andere Größe als der Füllstand soll nicht angezeigt werden.

Aus dem Journal of Physics E. Scientific Instruments,Vol. 16 (1983) Sept., No. 9, Dorking, GB ist ein kapazitiver Sensor mit einer isolierten Elektrode zur Wasserniveaumessung bekannt. Um die Messung unbeeinflußt von der Leitfähigkeit des Wassers durchführen zu können, wird sie bei einer einzigen, so niedrigen Frequenz durchgeführt, dass die Zeitkonstante für das Laden und Entladen der Kapazität noch nicht von der Leitfähigkeit des Wassers beeinflußt wird.

Aus der DE-OS 23 19 008 ist ein kapazitiver Niveauschalter zur Kontrolle des Bremsflüssigkeitsniveaus im hydraulischen Bremssystem von Kraftfahrzeugen bekannt, der bei Unterschreiten eines vorgegebenen Füllstandes ein Warnsignal abgibt. Der Füllstand, bei dem dieses Warnsignal abgegeben wird, kann dadurch variiert werden, dass der Sensor höhenverstellbar im Bremsflüssigkeitsbehälter angeordnet ist. Mit dem bekannten Sensor kann jedoch nicht der aktuelle Füllstand der Bremsflüssigkeit beobachtet und zur Anzeige gebracht werden.

Vorratsbehälter für die Bremsflüssigkeit in den hydraulischen Bremsanlagen von Kraftfahrzeugen haben üblicherweise eine Belüftungsöffnung. Durch diese Belüftungsöffnung nimmt die Bremsflüssigkeit Luftfeuchtigkeit auf und reichert sich allmählich mit Wasser an. Ein zu hoher Wasseranteil in der Bremsflüssigkeit kann zu einem lebensgefährlichen Versagen der Bremsanlage führen. Es wäre deshalb nützlich, den Wassergehalt der Bremsflüssigkeit zu kennen. Ein Meßfühler zur laufenden Überwachung des Wassergehaltes von Bremsflüssigkeit ist bisher nicht bekannt.

Andererseits ist es aus der DE-OS 34 13 135 bekannt, den Wassergehalt von Flüssigkeiten, z.B. von Schmieröl, mittels eines speziellen kapazitiven Sensors zu bestimmen, bei dem zwischen zwei Elektroden eine nichtleitende Membran angeordnet ist, in die die zu untersuchende Flüssigkeit eindringen kann. Dabei wird für die Bestimmung des Wassergehaltes das sich mit dem Wassergehalt ändernde dielektrische Verhalten der Flüssigkeit beobachtet. Dieser bekannte Sensor dient jedoch nicht zur Füllstandsüberwachung.

Der Erfindung liegt die Aufgabe zugrunde, eine möglichst einfache, für die Massenproduktion geeignete Möglichkeit zur laufenden Überwachung des Niveaus einer Flüssigkeit und des Wassergehaltes oder einer anderen vom spezifischen Widerstand bestimmten Zustandsgröße der Flüssigkeit zu schaffen.

Diese Aufgabe wird gelöst durch einen Sensor mit den im Anspruch 1 angegebenen Merkmalen. Vorteilhafte Weiterbildungen der Erfindung sind Gegenstand der Unteransprüche.

Mit dem erfindungsgemäßen Sensor kann sowohl der Füllstand (Niveau) der Bremsflüssigkeit als auch ihr Wassergehalt bestimmt werden, und zwar geschieht das dadurch, dass die komplexe Impedanz des Sensors bei wenigstens zwei unterschiedlichen Frequenzen gemessen und ausgewertet wird.Um das zu verstehen, muss man sich vergegenwärtigen, dass die in die Bremsflüssigkeit eintauchenden Elektroden der angeschlossenen Schaltung eine komplexe Impedanz darbieten, die sich als Serienschaltung eines ohmschen Wirkwiderstandes und eines oder zweier kapazitiver Blindwiderstände darstellt. Der ohmsche Wirkwiderstand ist gegeben durch den Widerstand der zwischen den Elektroden stehenden Bremsflüssigkeit. Der kapazitive Blindwiderstand ist bestimmt durch die Kapazität des Kondensators, der durch die mit elektrisch isolierendem Material beschichtete Elektrode, die Bremsflüssigkeit als Gegenelektrode und die elektrisch isolierende Deckschicht als die Dielektrikum gebildet ist. Tragen - wie es bevorzugt wird - beide Elektroden eine solche Deckschicht aus elektrisch isolierendem Material, dann wird der kapazitive Blindwiderstand bestimmt durch die Kapazität der Serienschaltung zweier solcher Kondensatoren mit der Bremsflüssigkeit als gemeinsamer Gegenelektrode.

Zur Bestimmung des Niveaus der Bremsflüssigkeit wird der kapazitive Blindwiderstand des Sensors gemessen, und zwar am besten mit Hilfe eines Wechselstroms, dessen Frequenz $f_1$ so niedrig gewählt ist, dass bei dieser Frequenz der kapazitive Blindwert der Impedanz des Sensors groß ist gegen den ohmschen Wirkwiderstand. Da die Abmessungen und die Anordnung der Elektroden sowie das den kapazitiven Blindwiderstand mitbestimmende Dielektrikum (die nicht leitende Deckschicht auf der bzw. den Elektroden) bekannt und konstant sind, hängt der kapazitive Blindwiderstand nur noch von der wirksamen Elektrodenfläche, das ist die eingetauchte Elektrodenfläche, also von der Eintauchtiefe der Elektroden ab. Der gemessene kapazitive Blindwiderstand ist also unmittelbar ein Maß für das Niveau der Bremsflüssigkeit im Vorratsbehälter.

Zur Messung des Wassergehaltes in der Bremsflüssigkeit wird der ohmsche Wirkwiderstand des Sensors bestimmt, und zwar am besten mit Hilfe eines Wechselstroms, dessen Frequenz $f_2$ so hoch gewählt ist, dass der bei dieser Frequenz gemessene ohmsche Widerstand groß ist gegen den kapazitiven Widerstand. Dieser ohmsche Wirkwiderstand ist der ohmsche Widerstand der zwischen den beiden Elektroden stehenden Bremsflüssigkeit und wird ausser durch die Abmessungen und die Anordnung der Elektroden bestimmt durch die Eintauchtiefe der Elektroden in die Bremsflüssigkeit und durch den spezifischen Widerstand der Bremsflüssigkeit. Die Abmessungen und Anordnung der beiden Elektroden sind bekannt und konstant, die Eintauchtiefe der Elektroden in die Bremsflüssigkeit ist variabel, aber aus der voraufgegangenen Füllstandsmessung bekannt. Der Quotient aus dem gemessenen Wirkwiderstand und der zuvor bestimmten Eintauchtiefe der Elektroden ist deshalb unmittelbar ein Maß für den spezifischen Widerstand der Bremsflüssigkeit und hängt in charakteristischer Weise vom Wassergehalt der Bremsflüssigkeit ab. Die Auswerteschaltung kann deshalb aus dem ermittelten spezifischen Widerstand den Wassergehalt bestimmen, vorzugsweise mittels eines Mikrocomputers, der den ermittelten spezifischen Widerstand mit einer ihm vorgegebenen und eingespeicherten Kennlinie vergleicht, die die Abhängigkeit des spezifischen Widerstandes vom Wassergehalt angibt.

An den Aufbau und die Art der verwendeten Elektroden sind keine besonderen Anforderungen zu stellen mit Ausnahme der Forderung, dass wenigstens eine der Elektroden eine Deckschicht aus elektrisch isolierendem Material tragen soll, welche den elektrisch leitenden Kern der Elektrode gegenüber der Flüssigkeit isoliert, wobei diese Deckschicht möglichst dicht sein soll, damit die zu überwachende Flüssigkeit nicht in sie eindringt und ihre dielektrische Eigenschaft verändert. Besonders geeignet ist eine Anordnung aus einer stabförmigen Elektrode und einer sie koaxial umgebenden rohrförmigen Elektrode, denn eine solche Anordnung ist besonders kompakt und leicht zu handhaben und Schwankungen des Flüssigkeitsspiegels infolge von Fahrbewegungen werden in einer solchen Elektrodenanordnung gedämpft. Die zugehörige Schaltung kann eine hochintegrierte, dadurch kompakte und preiswerte elektronische Schaltung sein. Zur Erzeugung der Wechselströme mit den beiden unterschiedlichen Frequenzen verwendet man vorzugsweise einen digital arbeitenden Sinusgenerator, wie er z.B. in der DE-Z Elektronik, Heft 17, 1983, Seiten 52 und 52 oder in der älteren, aber nicht vorveröffentlichten DE-A-36 43 389 beschrieben ist. Für die Impedanzmessung eignet sich besonders ein digital arbeitendes Messgerät, welches in der älteren, aber nicht vorveröffentlichten EP-A-0 271 849 offenbart ist. Dieses Meßgerät hat zur Auswertung der Meßwerte einen Mikrocomputer, der mit Vorteil auch eingesetzt werden kann, um aus den Messwerten Füllstandssignale und Wassergehaltssignale abzuleiten und zur Anzeige zu bringen.

Somit ist der erfindungsgemäße Sensor in seinem Aufbau sehr kompakt und preiswert herzustellen. Er kann ohne Schwierigkeit anstelle eines bislang zur Überwachung des Füllstandes von Bremsflüssigkeit üblichen Niveauschalters eingesetzt werden und liefert nicht nur bei Unterschreiten eines vorgegebenen Niveaus ein Signal, sondern kann den Füllstand über einen größeren Niveaubereich - abhängig von der maximalen Eintauchtiefe der Elektroden - und darüberhinaus den aktuellen Wassergehalt der Bremsflüssigkeit anzeigen.

Die Anwendungsmöglichkeiten des erfindungsgemäßen Sensors sind nicht auf die Überwachung von Bremsflüssigkeit beschränkt, er kann vielmehr überall dort eingesetzt werden, wo es darum geht, zumindest schwach leitende ineinander mischbare Flüssigkeiten hinsichtlich ihres Mischungsverhältnisses oder eine sich in ihrem spezifischen Widerstand verändernde Flüssigkeit hinsichtlich ihres Zustandes und des Füllstandes zu überwachen.

Der weiteren Erläuterung der Erfindung dienen die beigefügten Zeichnungen:

Figur 1     zeigt schematisch im Vertikalschnitt die Anordnung des Elektrodenpaares eines Sensors in einem Vorratsbehälter für Bremsflüssigkeit,

Figur 2     zeigt im Detail vergrößert einen Längsschnitt durch das Elektrodenpaar aus Fig. 1,

Figur 3     zeigt ein Ersatzschaltbild des Sensors, und

Figur 4     zeigt ein Blockschaltbild des Sensors.

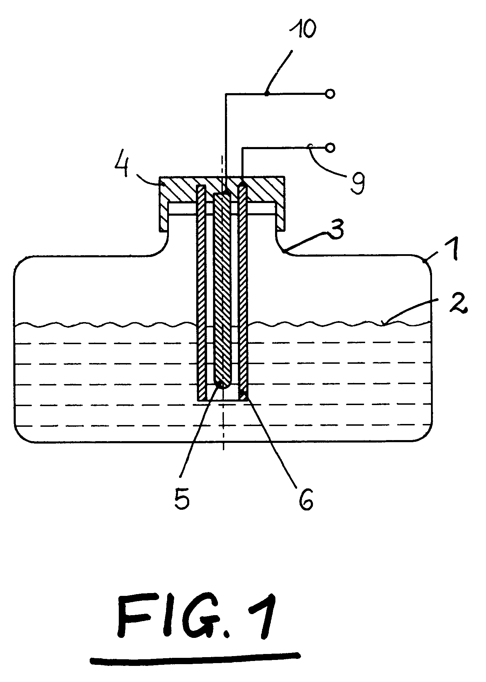

Figur 1 zeigt einen Vorratsbehälter 1, der bis zu einem Niveau 2 mit einer Bremsflüssigkeit angefüllt ist. Der Vorratsbehälter 1 hat auf seiner Oberseite einen Einfüllstutzen 3, der durch einen Deckel 4 verschlossen ist. Der Deckel 4 besteht aus einem elektrisch isolierenden Kunststoff und trägt an seiner Unterseite zwei Elektroden 5 und 6. Die Elektrode 5 ist eine stabförmige Innenelektrode und die Elektrode 6 ist eine rohrförmige, die Innenelektrode 5 koaxial umgebende Aussenelektrode. Beide Elektroden bestehen aus Titan und tragen eine Deckschicht 7 bzw. 8 aus Titandioxid, welche dadurch gebildet werden kann, dass man das Titan an Luft oxidieren läßt. Die Deckschichten 7 und 8 sind leitend und so dicht, dass sie keine Bremsflüssigkeit eindringen lassen. Elektrisch leitend ist nur der nicht oxidierte Kern 5a bzw. 6a der Elektroden. Die Elektroden tauchen beide in die Bremsflüssigkeit ein. Die Elektroden 5 und 6 sind mit je einer elektrischen Leitung 9 bzw. 10 verbunden, welche durch den Deckel 4 hindurchgeführt sind und zu einer elektronischen Schaltung 11 führen.

In einem praktisch ausgeführten Beispiel hat die Innenelektrode 5 einen Durchmesser von 4 mm, die Außenelektrode 6 einen Innendurchmesser von 10 mm; beide Elektroden sind 40 mm lang und ihre Deckschicht 7 bzw. 8 aus Titan ist wenige $\mu$m dick. Damit lassen sich Eintauchtiefen zwischen 10 mm und 25 mm sowie Wassergehalte in Bremsflüssigkeit von weniger als 0,05 % bestimmen.

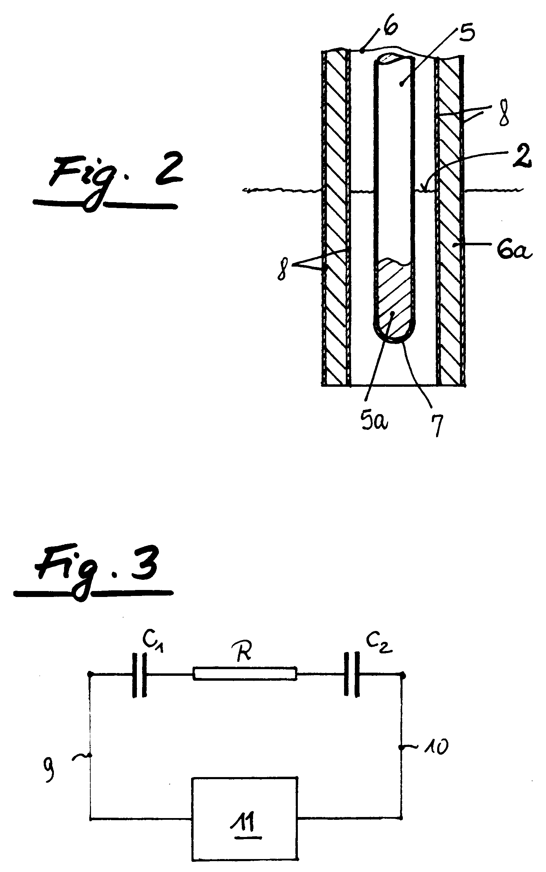

Die Figur 3 zeigt das Ersatzschaltbild dieser Anordnung. Es besteht aus eben dieser Schaltung 11 sowie aus zwei Kapazitäten C1 und C2 und einem ohmschen Widerstand R in Serienschaltung. Die Schaltung 11 dient zur Bestimmung der komplexen Impedanz

$$\underline{Z} = \sqrt{R^2 + \frac{1}{(2 \pi f (C_1 + C_2))^2}}$$

Die Kapazität C1 ist die Kapazität des Kondensators, der gebildet wird durch den Kern 5a der Innenelektrode als erster Elektrode, der in der Elektrodenanordnung bis zum Niveau 2 stehenden Bremsflüssigkeit als Gegenelektrode und der Deckschicht 7 als Dielektrikum. Die Kapazität C2 ist die Kapazität des Kondensators, der durch den Kern 6a der äußeren Elektrode als erster Elektrode, durch die bis zum Niveau 2 stehende Bremsflüssigkeit als Gegenelektrode und durch die Deckschicht 8 als Dielektrikum gebildet wird. R ist der ohmsche Widerstand der in der Aussenelektrode stehenden Bremsflüssigkeit.

Bei der gegebenen Elektrodenanordnung hängt die Kapazität C1 + C2 allein von der wirksamen Elektrodenfläche, das ist die von der Bremsflüssigkeit benetzte Oberfläche der Elektroden 5 und 6, also nur von der Eintauchtiefe der Elektroden 5 und 6 in die Bremsflüssigkeit ab.

Bei derselben gegebenen Anordnung hängt der ohmsche Widerstand R von der Eintauchtiefe der Elektroden in die Bremsflüssigkeit und von deren aktuellem spezifischem Widerstand ab.

C1 + C2 wird bestimmt, indem die Elektrodenanordnung mit einem Wechselstrom gespeist wird, dessen Frequenz $f_1$ so niedrig ist, dass der kapazitive Blindwiderstand

$$\frac{1}{2 \pi f_1 (C_1 + C_2)}$$

groß ist gegen den ohmschen Wirkwiderstand R. Der Blindwiderstand ist direkt ein Maß für die Eintauchtiefe der Elektroden in die Bremsflüssigkeit und damit für das zubestimmende Niveau 2.

Der Wirkwiderstand R wird bestimmt, indem die Elektrodenanordnung mit einem Wechselstrom gespeist wird, dessen Frequenz $f_2$ so groß ist, dass der Wirkwiderstand R groß ist gegen den kapazitiven Blindwiderstand. Der Wirkwiderstand R ist um so kleiner, je größer die Eintauchtiefe der Elektroden 5 und 6 ist. In erster Näherung ist der Wirkwiderstand R der Eintauchtiefe umgekehrt proportional. Aus dem gemessenen Wirkwiderstand und der zuvor bei der Frequenz $f_1$ bestimmten Eintauchtiefe läßt sich deshalb der spezifische Widerstand der Bremsflüssigkeit bestimmen. Der spezifische Widerstand der Bremsflüssigkeit ist abhängig von ihrem Wassergehalt; die Abhängigkeit ist bekannt bzw. kann für eine gegebene Bremsflüssigkeit empirisch ermittelt werden. Durch Vergleich des gemessenen spezifischen Widerstandes mit der bekannten bzw. empirisch ermittelten Kennlinie, die die Abhängigkeit des spezifischen Widerstandes vom Wassergehalt angibt, kann somit der Wassergehalt ermittelt und angezeigt werden. Diese Auswertung geschieht am einfachsten mit Hilfe eines Mikrocomputers.

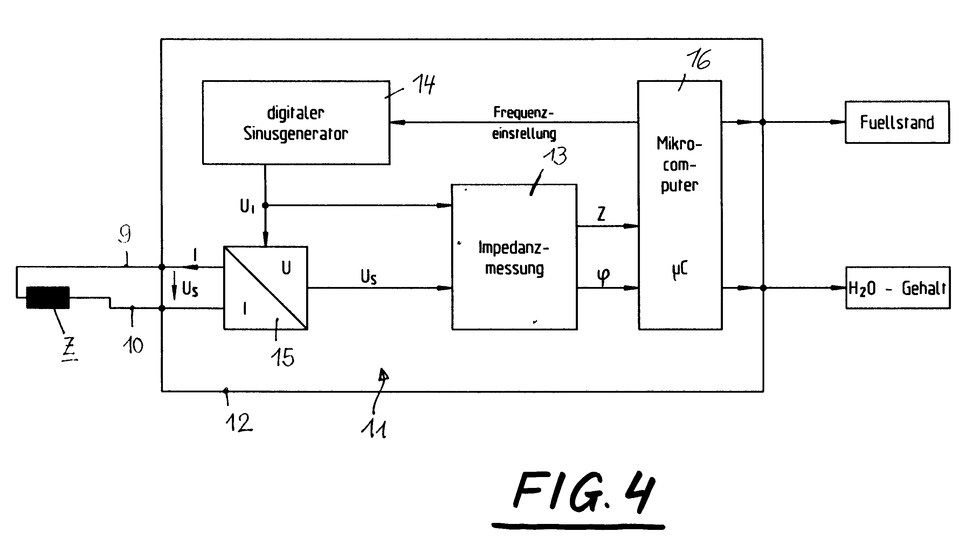

Figur 4 zeigt das Blockschaltbild einer dazu geeigneten Schaltung 11. Die Elektrodenanordnung ist schematisch als eine Impedanz $\underline{Z}$ dargestellt, welche durch die Anschlußleitungen 9 und 10 mit der auf einer Platine 12 angeordneten Schaltung 11 verbunden ist. Die Schaltung 11 besteht im wesentlichen aus einer Impedanzmeßschaltung 13, aus einem digitalen Sinusgenerator 14, aus einem Strom/Spannungs-Wandler 15 und aus einer Auswerteschaltung in Gestalt eines Mikrocomputers 16. Der digitale Sinusgenerator 14 liefert Wechselspannungen $U_I$ mit den Frequenzen $f_1$ und $f_2$ , wobei die Frequenzeinstellung durch den Mikrocomputer 16 bewirkt wird. Der Ausgang des Sinusgenerators 14 ist einerseits mit dem Strom/Spannungs-Wandler 15 und andererseits mit der Impedanzmeßschaltung 13 verbunden. Der Strom/Spannungs-Wandler 15 speist in die Elektrodenanordnung mit der zu bestimmenden Impedanz $\underline{Z}$ einen der Spannung $U_I$ entsprechenden Strom I ein. Die dementsprechend an der Elektrodenanordnung

abfallende Wechselspannung $U_s$ , welche gegenüber der Spannung $U_l$ um den Winkel $\phi$ in der Phase verschoben ist, wird dem Eingang der Impedanzmeßschaltung 13 mitgeteilt, die aus dem Verhältnis $U_s/U_l$ die Wirkkomponente der Impedanz $\underline{Z}$ ermittelt und auch die Phasenverschiebung $\phi$ bestimmt. Beispiele, wie eine solche Impedanzmessung durchgeführt werden kann, finden sich in der europ. Patentanmeldung 87 118 435.4. Aus der Wirkkomponente der Impedanz und der Phasenverschiebung $\phi$ errechnet der Mikrocomputer 16 auf an sich bekannte Weise die Blindkomponente der Impedanz und wertet die Wirkkomponente und die Blindkomponente - wie oben angegeben - zur Ausgabe von Füllstand und Wassergehalt aus.

**Patentansprüche**

1. Kapazitiver Sensor zum Bestimmen des Niveaus (2) einer zumindest schwach elektrisch leitfähigen Flüssigkeit in einem Behälter (1), insbesondere zum Bestimmen des Niveaus der Bremsflüssigkeit im hydraulischen Bremssystem von Kraftfahrzeugen, bestehend aus zwei zum Eintauchen in die Flüssigkeit bestimmten Elektroden (5, 6) und einer aktiven Schaltung (11), welche die Elektroden (5, 6) miteinander verbindet, von denen wenigstens eine eine Deckschicht (7, 8) aus elektrisch isolierendem Material trägt, welche den elektrisch leitenden Kern (5a, 6a) der Elektrode (5, 6) gegenüber der Flüssigkeit isoliert,
wobei die elektrische Schaltung (11) eine Impedanzmeßschaltung (13) umfaßt, welche den Sensor bei wenigstens zwei unterschiedlichen Frequenzen betreibt, <u>dadurch gekennzeichnet</u>, dass die Schaltung (11) aus der bei den unterschiedlichen Frequenzen gemessenen komplexen Impedanz des Sensors deren Realteil, d.h. den Ohmschen Wirkwiderstand, und den Imaginärteil, d.h. den kapazitiven Blindwiderstand,ermittelt,
sowie eine Auswerteschaltung (16) umfaßt, welche aus dem Imaginärteil der Impedanz die Eintauchtiefe des Sensors und damit das Niveau (2) der Flüssigkeit und aus dem Realteil der Impedanz unter Berücksichtigung der Eintauchtiefe des Sensors den spezifischen Widerstand der Flüssigkeit als Maß für ihren Wassergehalt oder eine andere vom spezifischen Widerstand mitbestimmte Zustandsgröße der Flüssigkeit bestimmt.

2. Sensor nach Anspruch 1, <u>dadurch gekennzeichnet</u>, dass die Impedanzmeßschaltung die Impedanz bei zwei unterschiedlichen Frequenzen $f_1$ und $f_2$ mißt, von denen die Frequenz $f_1$ so niedrig gewählt ist, dass der kapazitive Blindwiderstand der bei ihr gemessenen Impedanz groß ist gegen den Ohmschen Wirkwiderstand und die Frequenz $f_2$ so hoch gewählt ist, dass der Ohmsche Wirkwiderstand der bei ihr gemessenen Impedanz groß ist gegen den kapazitiven Blindwiderstand,
und dass die Auswerteschaltung (16) aus dem bei der niedrigeren Frequenz $f_1$ ermittelten Blindwiderstand das Niveau (2) der Flüssigkeit bestimmt und aus dem bei der höheren Frequenz $f_2$ ermittelten Wirkwiderstand unter Berücksichtigung des bestimmten Niveaus (2) den spezifischen Widerstand der Flüssigkeit bestimmt.

3. Sensor nach Anspruch 1 oder 2, dadurch gekennzeichnet, dass beide Elektroden (5, 6) eine Deckschicht (7, 8) aus elektrisch isolierendem Material tragen.

4. Sensor nach Anspruch 1, 2 oder 3, dadurch gekennzeichnet, dass die Deckschicht (7, 8) dicht ist.

5. Sensor nach Anspruch 1 oder 2, dadurch gekennzeichnet, dass die Impedanzmeßschaltung (13) mit einem die nötigen Meßsignale liefernden digitalen Sinusgenerator (14) verbunden ist und die Auswerteschaltung einen Mikrocomputer (16) umfaßt.

6. Sensor nach einem der vorstehenden Ansprüche, dadurch gekennzeichnet, dass die Elektroden (5, 6) aus Titan und die Deckschicht(en) (7, 8) aus Titandioxid bestehen.

7. Sensor nach einem der vorstehenden Ansprüche, dadurch gekennzeichnet, dass die eine Elektrode (5) stabförmig ausgebildet und koaxial in der rohrförmig ausgebildeten anderen Elektrode (6) angeordnet ist.

## Claims

1.  A capacitive sensor for determining the level (2) of a liquid, which is at least weakly electrically conductive, in a container (1), particularly for determining the level of the brake fluid in the hydraulic brake system of motor vehicles, consisting of two electrodes (5, 6), which are intended to be immersed into the liquid, and an active circuit (1), which interconnects the electrodes (5, 6), at least one of which carries a cover layer (7, 8) that consists of electrically insulating material and insulates the electrically conductive core (5a, 6a) of the electrode (5, 6) from the liquid,

    wherein the electric circuit (11) comprises an impedance-measuring circuit (13), by which the sensor is operated at at least two different frequencies, <u>characterized in that</u> the circuit (11) determines in dependence on the complex imedance of the sensor, which impedance is measured at the different frequencies, the real part of said impedance, i.e., the effective resistance, and the imaginary part, i.e., the capacitive reactance,

    and an evaluating circuit (16), which in dependence on the imaginary part of the impedance determines the depth of immersion of the sensor, i.e., the level (2) of the liquid, and in dependence on the real part of the impedance and in consideration of the depth of immersion of the sensor determines the resistivity of the liquid as a measure of its water content or another parameter of state of the liquid.

2.  A sensor according to claim 1, <u>characterized in that</u> the impedance-measuring circuit measures the impedance at two different frequencies $f_1$ and $f_2$, of which the frequency $f_1$ is selected to be so low that the capacitive reactance of the impedance measured at that frequency is high relative to the effective resistance, and the frequency $f_2$ is selected to be so high that the effective resistance of the impedance measured at that frequency is high relative to the capacitive reactance,

    and that the evaluating circuit (16) in dependence on the reactance measured at the lower frequency $f_1$ determines the level (2) of the liquid and in dependence on the resistance measured at the higher frequency $f_3$ and in consideration of the determined level (2) determines the resistivity of the liquid.

3.  A sensor according to claim 1 or 2, characterized in that both electrodes (5, 6) carry a cover layer (7, 8) of electrically insulating material.

4.  A sensor according to claim 1, 2 or 3, characterized in that the cover layer (7, 8) is tight.

5.  A sensor according to claim 1 or 2, characterized in that the impedance-measuring circuit (13) is connected to a digital sine wave generator (14) for supplying the required measuring signals and the evaluating circuit comprises a microcomputer (16).

6.  A sensor according to any of the preceding claims, characterized in that the electrodes (5, 6) consist of titanium and the cover layer(s) consist(s) of titanium dioxide.

7.  A sensor according to any of the preceding claims, characterized in that the one electrode (5) is rod-shaped and is coaxially disposed in the tubular other electrode (6).

## Revendications

1.  Capteur capacitif pour la détermination du niveau (2) d'un liquide de conductibilité électrique relativement faible dans un réservoir (1), essentiellement pour la détermination du niveau de liquide de frein dans le système de freinage hydraulique de véhicules automobiles, comprenant deux électrodes (5, 6) destinées à être plongées dans le liquide et un montage actif (11) reliant les électrodes (5, 6), desquelles au moins une est munie d'une couche de revêtement (7, 8) en un matériau isolant le noyau à conductibilité électrique (5a, 6a) des électrodes (5, 6) par rapport au liquide,

    le montage électrique (11) comprenant une connexion de mesure d'impédance (13) actionnant le capteur sous au moins deux fréquences différentes, <u>caractérisé en ce que</u> le montage (11) détecte de l'impédance complexe du capteur mesurée sous les différentes fréquences sa partie réelle, c'est-à-dire la résistance ohmique effective, et la partie imaginaire, c'est-à-dire la réactance capacitive,

    ainsi qu'un montage d'évaluation (16) déterminant, à partir de la partie imaginaire de l'impédance, la profondeur d'immersion du capteur et du fait le niveau (2) du liquide et, à partir de la partie réelle de l'impédance et en tenant compte de la profondeur d'immersion du capteur, la résistance spécifique du liquide en tant que mesure de sa teneur en eau ou bien une autre variable d'état du liquide également définie par la résistance spécifique.

2.  Capteur selon la revendication 1, caractérisé en ce que la connexion de mesure d'impédance mesure l'impédance sous deux fréquences $f_1$ et $f_2$, la fréquence $f_1$ étant choisie tellement basse que la réactance capacitive de l'impédance mesurée sous cette fréquence est grande par rapport à la résistance effective ohmique et la fréquence $f_2$ étant choisie tellement haute que la résistance effective ohmique de l'impédance mesurée sous cette fréquence est grande par rapport à la réactance capacitive,

    et que le montage d'évaluation (16) détermine, à partir de la réactance capacitive décelée sous la fréquence $f_1$, le niveau (2) du liquide et, à partir de la résistance effective décelée sous la fréquence plus haute $f_2$ et en tenant compte du niveau (2) déterminé, la résistance spécifique du liquide.

3.  Capteur selon la revendication 1 ou 2, caractérisé en ce que les deux électrodes (5, 6) sont munies d'une couche de revêtement (7, 8) en un matériau isolant électriquement.

4.  Capteur selon la revendication 1, 2 ou 3, caractérisé en ce que la couche de revêtement (7, 8) est étanche.

5.  Capteur selon la revendication 1 ou 2, caractérisé en ce que la connexion de mesure d'impédance (13) est reliée à un générateur d'ondes sinusoïdales numérique (14) fournissant les signaux de mesure nécessaires et que le montage d'évaluation comprend un micro-ordinateur (16).

6.  Capteur selon l'une des revendications précédentes, caractérisé en ce que les électrodes (5, 6) sont en titane et la (les) couche(s) de revêtement (7, 8) en oxyde de titane.

7.  Capteur selon l'une des revendications précédentes, caractérisé en ce que l'une des électrodes (5) est en forme de barre et disposée coaxialement dans l'autre électrode (6) en forme de tube.

# FIG. 1

*Fig. 2*

*Fig. 3*

FIG. 4

digitaler Sinusgenerator

Frequenz-einstellung

Mikro-computer

µC

Impedanz-messung

Fuellstand

$H_2O$ – Gehalt

$U_1$

$U_S$

$U_S$

I

I

U

Z

$\varphi$

9

10

12

11

15

13

14

16

$Z_i$

EP 0 338 400 B1

10